# EUROPEAN PATENT APPLICATION

(11) **EP 4 708 650 A1**
(43) Date of publication of application: **11.03.2026**
(21) Application number: 24848547.6
(22) Date of filing: 01.02.2024
(51) Int. Cl.: H02K 21/38, F16H 49/00

(54) **STATOR, MAGNETIC GEAR ELECTRIC MACHINE, AND METHOD FOR ASSEMBLING STATOR**

(30) Priority: 28.07.2023 JP 2023122927
(71) Applicant: Mitsubishi Heavy Industries, Ltd., Tokyo 100-8332 (JP)
(72) Inventor: SHIMONO, Kodai, Tokyo 100-8332 (JP)
(74) Representative: Studio Torta S.p.A.
(86) International application number: PCT/JP2024/003262
(87) International publication number: WO 2025/027884

(57) **Abstract**

A stator core includes: a core inner peripheral surface along which a plurality of magnets is arranged; a first projection protruding radially inward from the core inner peripheral surface and having a first support surface supporting the first inclined surface; and a second projection protruding radially inward from the core inner peripheral surface and having a second support surface supporting the second inclined surface. Both the first support surface and the second support surface are inclined with respect to the radial direction and slope toward the center of the first radial magnet as they extend radially inward.

## Description

### TECHNICAL FIELD

The present disclosure relates to a stator, a magnetic geared electrical machine, and a method of assembling a stator.

The present application claims priority based on Japanese Patent Application No. 2023-122927 filed on July 28, 2023, the entire content of which is incorporated herein by reference.

### BACKGROUND ART

The stator disclosed in Patent Document 1 is incorporated in a magnetic gear device. The stator includes a stator core, and a plurality of magnets disposed radially inward of the stator core and arranged in the circumferential direction.

### Citation List

### Patent Literature

Patent Document 1: US Patent Application Publication No. 2019/0157962

### SUMMARY

### Problems to be Solved

The present inventors have devised the application of a Halbach array which concentrates the magnetic flux radially inward of the stator to the magnet arrangement of the stator. However, there is concern that the magnets may come off from teeth of the stator core due to the different magnetization directions of circumferentially adjacent magnets. According to the inventor's knowledge, a radially outward magnetized magnet is biased radially inward by a magnetic force from the other magnets, and the detachment of this magnet is of particular concern. It is preferable that the suppression of detachment of such a magnet be achieved with a simple configuration.

An object of the present disclosure is to provide a stator, a magnetic geared electrical machine, and a method of assembling a stator that can suppress the detachment of at least one of a plurality of magnets with a simple configuration.

### Solution to the Problems

A stator according to at least one embodiment of the present disclosure includes: a stator core; and a plurality of magnets including a group of magnets disposed radially inward of the stator core and arranged continuously in the circumferential direction, the group of magnets being arranged in a Halbach array. The group of magnets includes a first radial magnet magnetized radially outward. The first radial magnet has: an outer peripheral surface; a first inclined surface that is connected to one end portion of the outer peripheral surface in the circumferential direction and slopes toward the center of the first radial magnet in the circumferential direction as it extends radially inward; and a second inclined surface that is connected to the other end portion of the outer peripheral surface in the circumferential direction and slopes toward the center of the first radial magnet as it extends radially inward. The stator core includes: a core inner peripheral surface along which the plurality of magnets is arranged; a first projection protruding radially inward from the core inner peripheral surface and having a first support surface supporting the first inclined surface; and a second projection protruding radially inward from the core inner peripheral surface and having a second support surface supporting the second inclined surface. Both the first support surface and the second support surface are inclined with respect to the radial direction and slope toward the center of the first radial magnet as they extend radially inward.

A magnetic geared electrical machine according to at least one embodiment of the present disclosure includes: the above-described stator; a pole piece rotor including a plurality of pole pieces disposed radially inward of the stator and arranged in the circumferential direction; and a magnet rotor including an inner magnet disposed radially inward of the plurality of pole pieces.

A method of assembling a stator according to an embodiment of the present disclosure is to assemble the above-described stator, including a step of sliding the first radial magnet in an axial direction to engage the first inclined surface with the first projection and to engage the second inclined surface with the second projection.

### Advantageous Effects

The present disclosure provides a stator, a magnetic geared electrical machine, and a method of assembling a stator that can suppress the detachment of at least one of a plurality of magnets with a simple configuration.

### BRIEF DESCRIPTION OF DRAWINGS

FIG. 1 is a schematic diagram of a magnetic geared electrical machine according to an embodiment.
FIG. 2 is a schematic diagram of a stator according to an embodiment.
FIG. 3 is a partial enlarged view of FIG. 2.
FIG. 4 is a partial enlarged view of FIG. 3.
FIG. 5 is a schematic diagram of a stator core according to the first embodiment.
FIG. 6 is a schematic diagram of a stator core according to the second embodiment.
FIG. 7 is a schematic diagram showing the process of assembling a first radial magnet according to the second embodiment.
FIG. 8 is a schematic diagram showing the process of assembling a first radial magnet following FIG. 7.
FIG. 9 is a schematic diagram showing a detailed example of a first split magnet and a second split magnet.
FIG. 10 is a schematic diagram of a stator core according to the third embodiment.
FIG. 11 is a schematic diagram of a first radial magnet according to the third embodiment.
FIG. 12 is a schematic diagram showing the process of assembling a first radial magnet according to the third embodiment.
FIG. 13A is a schematic diagram of a plate according to the first example.
FIG. 13B is a schematic diagram of a plate according to the second example.
FIG. 13C is a schematic diagram of a plate according to the third example.
FIG. 14 is a flowchart of a method of assembling a stator according to an embodiment.
FIG. 15 is a schematic diagram showing a step of placing a radial magnet according to an embodiment.
FIG. 16 is a schematic diagram of a stator according to another embodiment.

### DETAILED DESCRIPTION

Embodiments of the present disclosure will be described below with reference to the accompanying drawings. It is intended, however, that unless particularly identified, dimensions, materials, shapes, relative positions, and the like of components described in the embodiments shall be interpreted as illustrative only and not intended to limit the scope of the present disclosure.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

The same configurations are indicated by the same reference signs and may not be described again in detail.

### <Overall configuration of magnetic geared electrical machine 10>

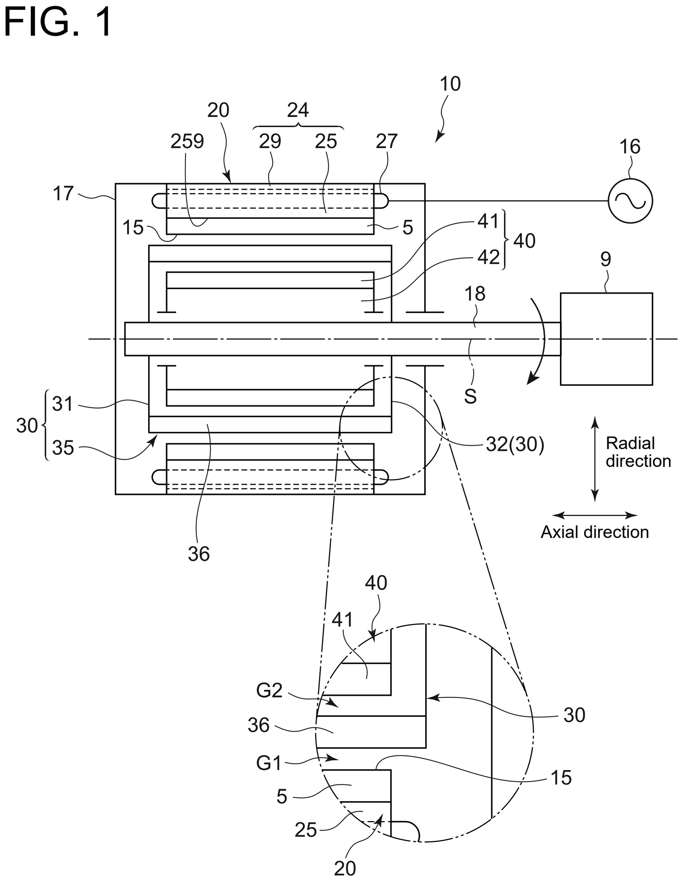

FIG. 1 is a schematic diagram of a magnetic geared electrical machine 10 according to an embodiment of the present disclosure. The magnetic geared electrical machine 10 includes a rotational shaft 18 connected to an external device 9. In the following description, "axial direction" or "axially" refers to the axial direction of the axis S of the rotational shaft 18, "circumferential direction" or "circumferentially" refers to the circumferential direction with respect to the axis S, and "radial direction" or "radially" refers to the radial direction with respect to the axis S. The term "radially inward" or "radially inner side" indicates the side toward the axis S, and the term "radially outward" or "radially outer side" indicates the side away from the axis S. The axis S coincides with the axis of a stator (stator 20) for the magnetic geared electrical machine 10, which will be described later.

The magnetic geared electrical machine 10 includes a housing 17 rotatably supporting the rotational shaft 18, and a stator 20 fixed to the housing 17.

The stator 20 includes a stator core 24, and the stator core 24 includes a yoke 29 extending in the circumferential direction, and a plurality of teeth 25 protruding radially inward from the yoke 29. The plurality of teeth 25 are arranged at intervals in the circumferential direction. The stator 20 further includes a plurality of magnets 5 disposed radially inward of the stator core 24 and arranged in the circumferential direction, and a stator coil 27 wound around the plurality of teeth 25. The stator coil 27 is electrically connected to an electric power system 16. In this example, the surface permanent magnet (SPM) configuration is used, in which the plurality of magnets 5 is arranged along the inner peripheral surface of the stator core 24. The SPM configuration of the stator 20 may be as shown in FIG. 1, in which the magnets 5 are directly attached to a teeth inner peripheral surface 259, which is the inner peripheral surface of the teeth 25.

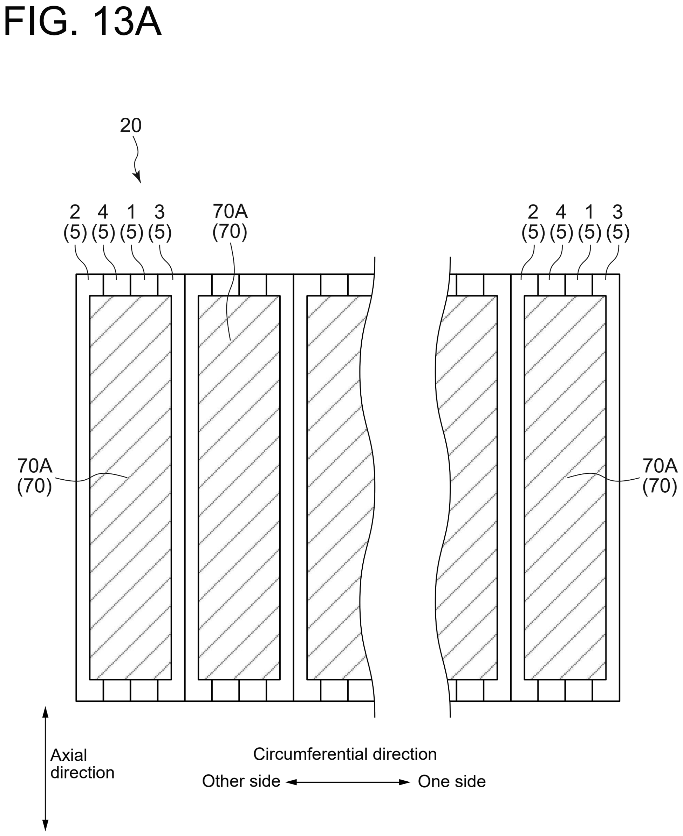

The magnetic geared electrical machine 10 shown in FIG. 1 further includes a pole piece rotor 30. The pole piece rotor 30 includes an annular body 35 disposed radially inward of the stator 20 and extending along the axis S, a connection member 31 connecting one end of the annular body 35 to the rotational shaft 18, and a connection member 32 connecting the other end of the annular body 35 to the rotational shaft 18. The annular body 35 includes a plurality of pole pieces 36 and a plurality of non-magnetic bodies (not shown) arranged alternately along the circumferential direction. The annular body 35 faces the stator 20 with an outer air gap G1 therebetween in the radial direction. For example, if the inner peripheral surface 15 of each of the plurality of magnets 5 is exposed to the outer air gap G1, the annular body 35 faces the plurality of magnets 5. Alternatively, if another member, such as a plate 70 (see FIGs. 13A to 13C), is attached to the inner peripheral surface 15, the annular body 35 faces this member.

The connection members 31, 32 extend along the radial direction. The connection members 31, 32 in the example of FIG. 1 are fixed to the rotational shaft 18, and the pole piece rotor 30 is configured to rotate integrally with the rotational shaft 18. Each pole piece 36 may be a plurality of electromagnetic steel sheets laminated in the axial direction, or at least one powder magnetic core extending in the axial direction, or a combination thereof. If the electromagnetic steel sheets are laminated, eddy current losses can be reduced at the magnetic pole pieces 36.

The magnetic geared electrical machine 10 further includes a magnet rotor 40 connected to the rotational shaft 18 between the connection members 31, 32. The magnet rotor 40 includes a plurality of inner magnets 41 disposed radially inward of the annular body 35 and arranged in the circumferential direction, and a rotor core 42 that supports the inner magnets 41. The rotor core 42 is connected to the rotational shaft 18 via a bearing, and the magnet rotor 40 is configured to rotate relative to the rotational shaft 18. The magnet rotor 40 faces the annular body 35 with an inner air gap G2 therebetween in the radial direction. In the example of FIG. 1, the SPM configuration is used, in which the plurality of inner magnets 41 is arranged along the outer peripheral surface of the rotor core 42, but the interior permanent magnet (IPM) configuration may be used, in which the plurality of inner magnets 41 is provided inside the rotor core 42.

The magnetic geared electrical machine 10 according to an embodiment is a magnetic geared motor configured to drive the external device 9 upon receiving electric power supplied from the electric power system 16, the operation principle is as follows: The magnet rotor 40 rotates by a rotating magnetic field generated by energization of the stator coil 27. The positional relationship of the annular body 35 relative to the plurality of inner magnets 41 and the plurality of magnets 5 changes in the circumferential direction, the magnetic flux between the magnet rotor 40 and the stator 20 is modulated, and the pole piece rotor 30 rotates. Torque is transmitted from the rotational shaft 18, which rotates together with the pole piece rotor 30, to the external device 9, so that the external device 9 is driven.

The magnetic geared electrical machine 10 according to another embodiment is a magnetic geared generator configured to obtain power from the external device 9 and supply electric power to the electric power system 16, the operation principle is as follows: The pole piece rotor 30 rotates together with the rotational shaft 18 as the external device 9 drives the rotational shaft 18. The positional relationship of the annular body 35 relative to the plurality of inner magnets 41 and the plurality of magnets 5 changes in the circumferential direction, and the magnet rotor 40 rotates. The electromagnetic induction caused by the rotation of the pole piece rotor 30 and the magnet rotor 40 generates a current in the stator coil 27, so that electric power is supplied to the electric power system 16.

NL = NH + NS holds, where NL is the number of magnetic poles of the pole pieces 36, NH is the number of pairs of magnetic poles (pole pairs) of the inner magnets 41, and NS is the number of pairs of magnetic poles (pole pairs) of the magnets 5. If this relationship holds, the ratio of the number of rotations of the magnet rotor 40 to the pole piece rotor 30 is expressed as NL/NH. In this example, NL/NH is greater than 1, meaning that the magnet rotor 40 functions as a high-speed rotor and the pole piece rotor 30 functions as a low-speed rotor. The number of magnetic poles NL of the pole pieces 36 is smaller than the number of pole pairs NS of the magnets 5.

The magnetic geared electrical machine 10 of the present disclosure is not limited to the above-described embodiments. The external device 9 may be connected to a power transmission shaft (not shown) that is disposed coaxially with the rotational shaft 18. The power transmission shaft and the rotational shaft 18 are not coupled with each other. In this case, the connection member 31 is connected to the rotational shaft 18 via a bearing, while the connection member 32 is fixed to the power transmission shaft. Further, the rotor core 42 of the magnet rotor 40 is fixed to the rotational shaft 18. This allows the magnet rotor 40 to rotate integrally with the rotational shaft 18 and the pole piece rotor 30 to rotate relative to the rotational shaft 18.

### <Basic configuration of stator 20>

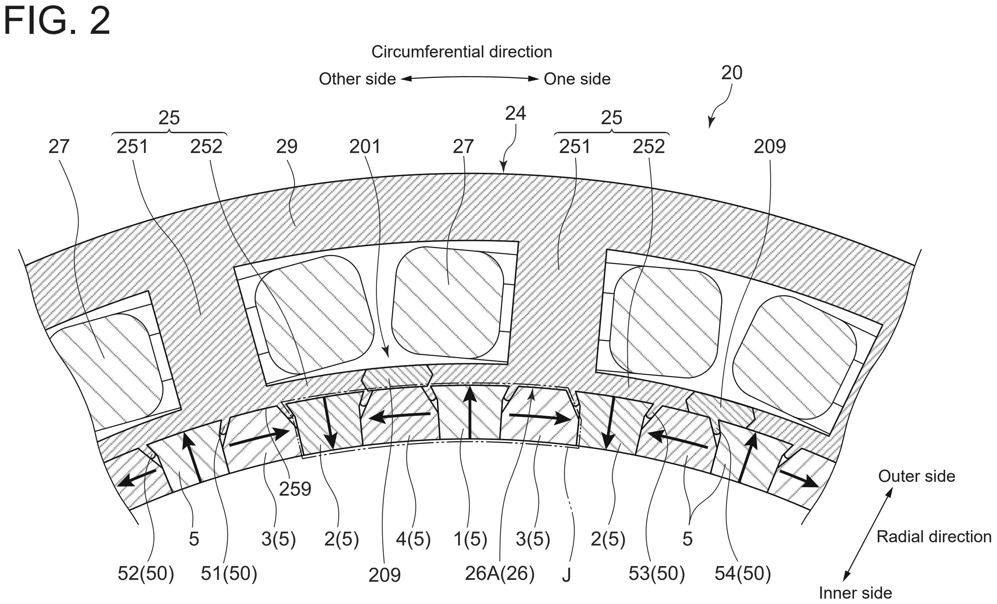

FIG. 2 is a schematic diagram of the stator 20 according to an embodiment of the present disclosure. Each of the plurality of teeth 25 constituting the stator core 24 has a protruding portion 251 protruding radially inward from the yoke 29, and a tip portion 252 connected to the tip of the protruding portion 251. The yoke 29, the protruding portion 251, and the tip portion 252 are integrally formed of the same soft magnetic material. In the circumferential direction, the protruding portion 251 is shorter than the tip portion 252. The stator coil 27 is wound around the protruding portion 251.

A slot opening 201 is formed as a space between two circumferentially adjacent tip portions 252, and a retaining member 209, which may be formed of, for example, resin material, is disposed in the slot opening 201. The retaining member 209 is held by the circumferential ends of the two tip portions 252.

The plurality of magnets 5 is disposed on the inner peripheral side of the stator core 24. In the following description, the inner peripheral surface of the stator core 24 along which the plurality of magnets 5 is arranged may be referred to as "core inner peripheral surface 26". In the example of FIG. 2, the teeth inner peripheral surface 259 and the inner peripheral surface of the retaining member 209 correspond to the core inner peripheral surface 26A (26) according to an embodiment.

However, the present disclosure is not limited thereto. When another member is interposed between the tip portion 252 or the retaining member 209 and the plurality of magnets 5, the inner peripheral surface of this member corresponds to the core inner peripheral surface 26B (26) according to another embodiment (see FIG. 17). The details of the core inner peripheral surface 26B will be described later.

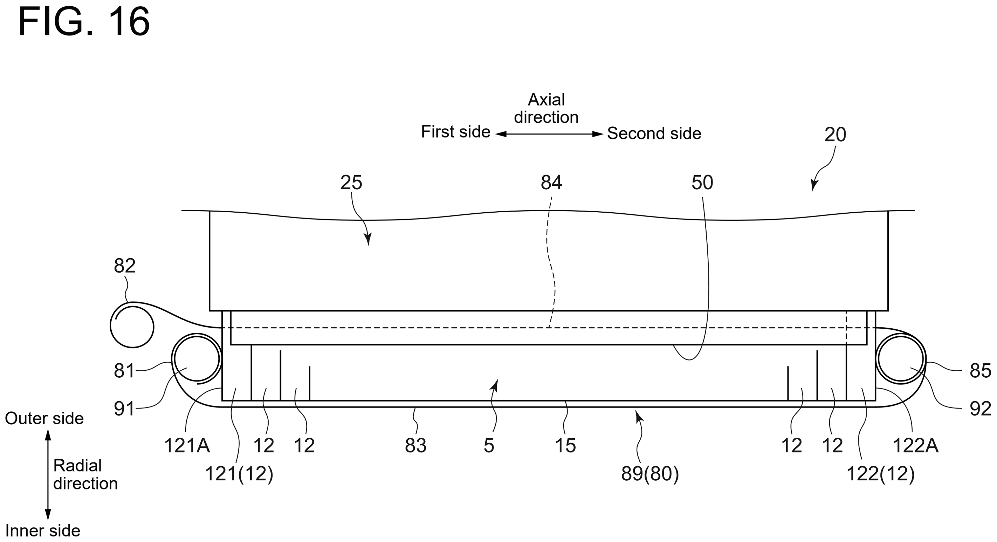

Referring to FIG. 2, the explanation of the magnets 5 will be continued. The plurality of magnets 5 includes a group of magnets arranged continuously in the circumferential direction (e.g., four magnets 5 arranged continuously in the circumferential direction) in a Halbach array. This Halbach array strengthens the magnetic flux from the magnets 5 on the radially inner side of the plurality of magnets 5 rather than on the radially outer side. The stator 20 of the present embodiment employs a configuration with a plurality of such magnet groups consisting of four magnets 5. That is, the total number of magnets 5 constituting the stator 20 is a multiple of four. In FIG. 2, the four magnets 5 included in one magnet group are surrounded by the dashed two-dotted line J. Each magnet 5 extending along the axial direction is composed of a plurality of axially stacked permanent magnets 12 (see FIG. 16). Herein, such a magnet 5 (see FIG. 2) extending along the axial direction is counted as one magnet for the sake of explanation. The permanent magnets 12 may not all have the same shape as each other. The details will be described later.

Hereinafter, the Halbach-arrayed magnet group may also be referred to as "four magnets 5".

The four magnets 5 in a Halbach array include a first radial magnet 1 magnetized radially outward, a first circumferential magnet 3 magnetized to one side in the circumferential direction, a second circumferential magnet 4 magnetized to the other side in the circumferential direction, and a second radial magnet 2 magnetized radially inward. The first circumferential magnet 3 is disposed on one side of the first radial magnet 1 in the circumferential direction, the second circumferential magnet 4 is disposed on the other side of the first radial magnet 1 in the circumferential direction, and the second radial magnet 2 is disposed on the other side of the second circumferential magnet 4 in the circumferential direction. The magnetization directions of these four magnets 5 are indicated by thick arrows for each magnet 5, and the end of each magnet 5 on the side toward which the arrow points is the N pole. In this example, the respective magnetization components of the first radial magnet 1 and the second radial magnet 2 include only radial components and not circumferential components. The respective magnetization components of the first circumferential magnet 3 and the second circumferential magnet 4 include only circumferential components and not radial components. However, the present disclosure is not limited thereto, and the respective magnetization components of the first circumferential magnet 3 and the second circumferential magnet 4 may include radial components in addition to circumferential components (details will be described below).

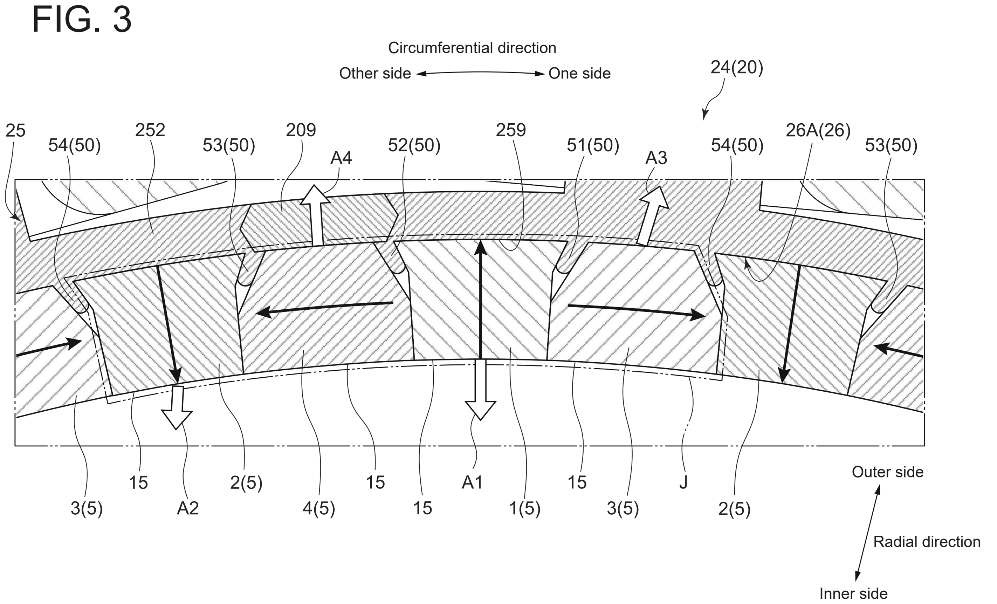

FIG. 3 is a partial enlarged view of FIG. 2. Arrows A1 to A4 indicate the magnetic forces that each magnet 5 receives due to the magnetic flux of the other magnet 5. More specifically, arrow A1 indicates the magnitude and direction of the magnetic force received by the first radial magnet 1. Similarly, arrow A2 indicates the direction and magnitude of the magnetic force received by the second radial magnet 2, arrow A3 indicates the direction and magnitude of the magnetic force received by the first circumferential magnet 3, and arrow A4 indicates the direction and magnitude of the magnetic force received by the second circumferential magnet 4. The lengths of arrows A1 to A4 indicate the magnitude of the magnetic forces, and a longer arrow represents a larger magnetic force. The direction and magnitude of the magnetic forces can be identified by simulation.

As can be seen from FIG. 3, the first radial magnet 1 has the largest radially inward magnetic force, and the risk of detachment of the first radial magnet 1 is higher than the risk of detachment of the other three magnets 5. The second radial magnet 2 also has a radially inward magnetic force, and the risk of detachment of the second radial magnet 2 is higher than the risk of detachment of the first circumferential magnet 3 and the second circumferential magnet 4. Therefore, in this example, projections 50 are provided on the core inner peripheral surface 26A (26) to support the first radial magnet 1 and the second radial magnet 2. Since the first circumferential magnet 3 and the second circumferential magnet 4 are subjected to radially outward magnetic forces, a configuration to support these two magnets 5 is not essential.

The projections 50 include a first projection 51 and a second projection 52 that support the first radial magnet 1, and a third projection 53 and a fourth projection 54 that support the second radial magnet 2. The first projection 51 and the second projection 52 support both end surfaces of the first radial magnet 1 in the circumferential direction, respectively, while the third projection 53 and the fourth projection 54 support both end surfaces of the second radial magnet 2 in the circumferential direction, respectively. In this example, the first projection 51, the second projection 52, the third projection 53, and the fourth projection 54 are arranged in order from one side to the other side in the circumferential direction.

The first radial magnet 1 and the second radial magnet 2 have the same shape. The first projection 51 and the third projection 53 have the same shape, and the second projection 52 and the fourth projection 54 have the same shape. For avoiding repetitive descriptions, the structure in which the first radial magnet 1 is supported by the first projection 51 and the second projection 52 will be mainly described below. All components related to the support structure of the first radial magnet 1 described below are also applicable to the support structure of the second radial magnet 2.

### <Overview of support structure of first radial magnet 1>

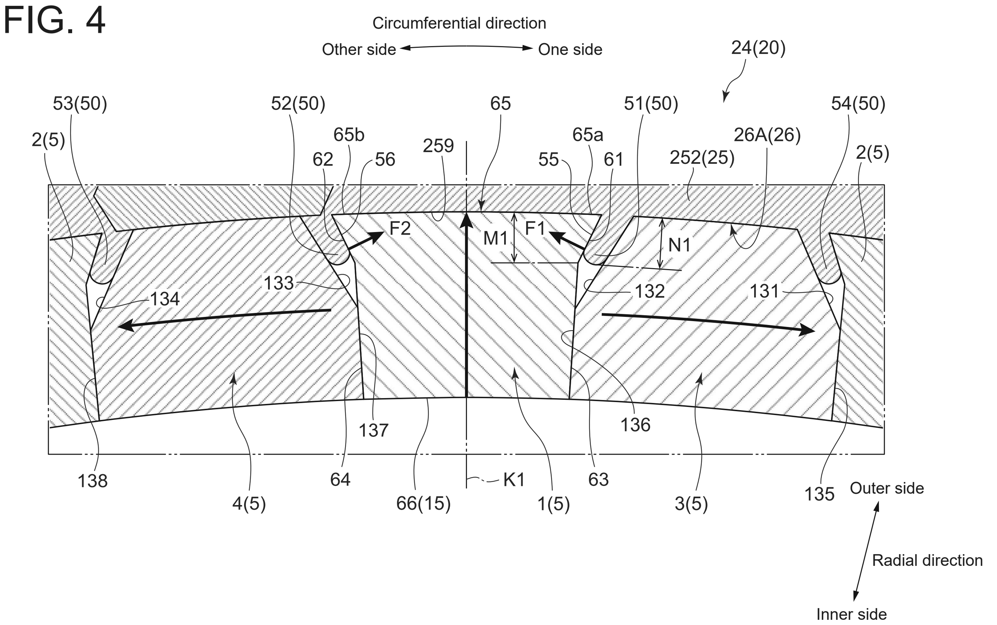

Prior to describing the support structure of the first radial magnet 1, an overview of the shape of the first radial magnet 1 will be described with reference to FIG. 4. FIG. 4 is a partial enlarged view of FIG. 3. The first radial magnet 1 has an outer peripheral surface 65 in contact with the teeth inner peripheral surface 259, a first inclined surface 61 connected to one end portion 65a of the outer peripheral surface 65 in the circumferential direction, and a second inclined surface 62 connected to the other end portion 65b of the outer peripheral surface 65 in the circumferential direction. The first inclined surface 61 and the second inclined surface 62 slope toward the center (imaginary line K1) of the first radial magnet 1 in the circumferential direction as they extend radially inward. Both the first inclined surface 61 and the second inclined surface 62 in this example are inclined with respect to the radial direction. The first inclined surface 61 may be directly connected to one end portion 65a, or may be indirectly connected via another surface such as a curved surface. Similarly, the second inclined surface 62 may be directly or indirectly connected to the other end portion 65b.

In this example, the radial length (dimension M1) of the first inclined surface 61 is not more than 50% of the radial length of the first radial magnet 1, more specifically not more than 25%. Similarly, the radial length of the second inclined surface 62 is not more than 50% of the radial length of the first radial magnet 1, more specifically not more than 25%. Although not essential in the present disclosure, the first radial magnet 1 is symmetrical in the circumferential direction, and the first inclined surface 61 and the second inclined surface 62 have the same radial length.

The first radial magnet 1 in this example further has an inner peripheral surface 66 (15) facing radially inward, a first connection surface 63 connecting the first inclined surface 61 and the inner peripheral surface 66, and a second connection surface 64 connecting the second inclined surface 62 and the inner peripheral surface 66. The first connection surface 63 is directly connected to the radially inner end of the first inclined surface 61, and the second connection surface 64 is directly connected to the radially inner end of the second inclined surface 62. Although not essential in the present disclosure, the first connection surface 63 and the second connection surface 64 are planes extending parallel to the radial direction.

The first projection 51 and the second projection 52 will now be described. The first projection 51 and the second projection 52 protrude radially inward from the core inner peripheral surface 26. As a more specific example, the first projection 51 and the second projection 52 protrude radially inward from the teeth inner peripheral surface 259. In this example, the first projection 51, the second projection 52, and the teeth 25 are integrally formed of the same material.

The radial length (dimension N1) of the first projection 51 is not more than 25% of the radial length of the first radial magnet 1, more specifically not more than 10%. The radial length of the first projection 51 may be shorter than the radial length of the first inclined surface 61.

Similarly, the radial length of the second projection 52 is not more than 25% of the radial length of the first radial magnet 1, more specifically not more than 10%. The radial length of the second projection 52 may be shorter than the radial length of the second inclined surface 62. The first projection 51 and the second projection 52 in this example are symmetrical to each other in the circumferential direction.

In this example, a plurality of first projections 51 and a plurality of second projections 52 are provided along the entire circumferential length of the stator core 24. At least one of the plurality of first projections 51 and the plurality of second projections 52 may protrude radially inward from the previously described retaining member 209 (see FIG. 2). In this case, the projection 50 and the retaining member 209 are integrally formed of the same material.

Referring to FIG. 4, the explanation of the first projection 51 and the second projection 52 will be continued. The first projection 51 has a first support surface 55 that supports the first inclined surface 61, and the second projection 52 has a second support surface 56 that supports the second inclined surface 62. Both the first support surface 55 and the second support surface 56 are inclined with respect to the radial direction and slope toward the center of the first radial magnet 1 in the circumferential direction as they extend radially inward. The first support surface 55 may be in direct contact with the first inclined surface 61 or in indirect contact via another member such as an adhesive. Similarly, the second support surface 56 may be in direct or indirect contact with the second inclined surface 62. In the illustrated example, the first inclined surface 61 and the second inclined surface 62 are parallel to the first support surface 55 and the second support surface 56, respectively, but the present disclosure is not limited thereto. For example, if another member is interposed between the first inclined surface 61 and the first support surface 55, the first inclined surface 61 may be non-parallel to the first support surface 55. Similarly, the second inclined surface 62 may be non-parallel to the second support surface 56.

With the above configuration, since the first support surface 55 and the second support surface 56 are inclined with respect to the radial direction, the radially outward force F1, F2 acting on the first radial magnet 1 from each of the first support surface 55 and the second support surface 56 can be increased, and the detachment of the first radial magnet 1 can be suppressed. Additionally, since the force acting on the first radial magnet 1 can be increased without increasing the radial length of each of the first support surface 55 and the second support surface 56, the radial length of each of the first projection 51 and the second projection 52 can be shortened, and the configuration of the stator core 24 can be simplified. Thus, it is possible to achieve a stator 20 that can suppress the detachment of at least one of the plurality of magnets 5 with a simple configuration.

The stator core 24 does not have to include the third projection 53 and the fourth projection 54. As already described, the risk of detachment of the second radial magnet 2 is smaller than the risk of detachment of the first radial magnet 1, and a configuration where the second radial magnet 2 is attached to the teeth inner peripheral surface 259 with an adhesive, for example, may be adopted. Even in this embodiment, the above-described advantages are obtained.

With the configuration where the core inner peripheral surface 26A (26) includes the teeth inner peripheral surface 259, the first projection 51 and the second projection 52 can be integrated with the plurality of teeth 25, further simplifying the configuration of the stator 20.

Hereinafter, further details of the first projection 51 and the second projection 52 will be described sequentially, divided into the first embodiment, the second embodiment, and the third embodiment. However, the present disclosure is not limited to the three embodiments. In the following description, one side in the axial direction may simply be referred to as the "first side", and the other side in the axial direction may simply be referred to as the "second side".

### <Details of first projection 51 and second projection 52 (first embodiment)>

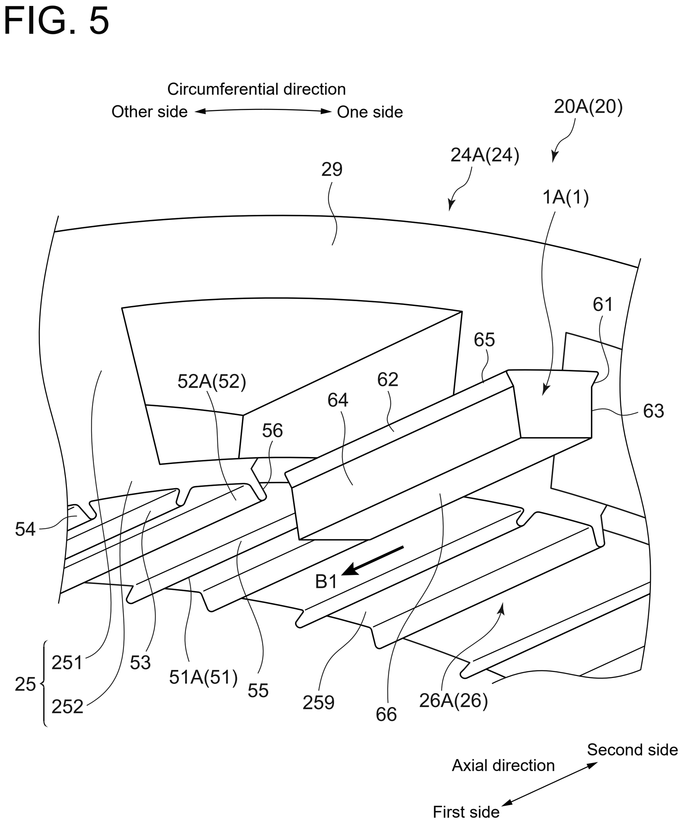

FIG. 5 is a schematic diagram of a stator 20A (20) according to the first embodiment. The stator 20A includes a stator core 24A (24). The first projection 51A (51) and the second projection 52A (52) of the stator core 24A are both provided on the teeth inner peripheral surface 259, which is an example of the core inner peripheral surface 26. In the illustrated example, at least one of the first projection 51A or the second projection 52A extends continuously in the axial direction over the entire axial length of the teeth inner peripheral surface 259. In the illustrated example, both the first projection 51A and the second projection 52A extend continuously in the axial direction and support the first radial magnet 1A (1).

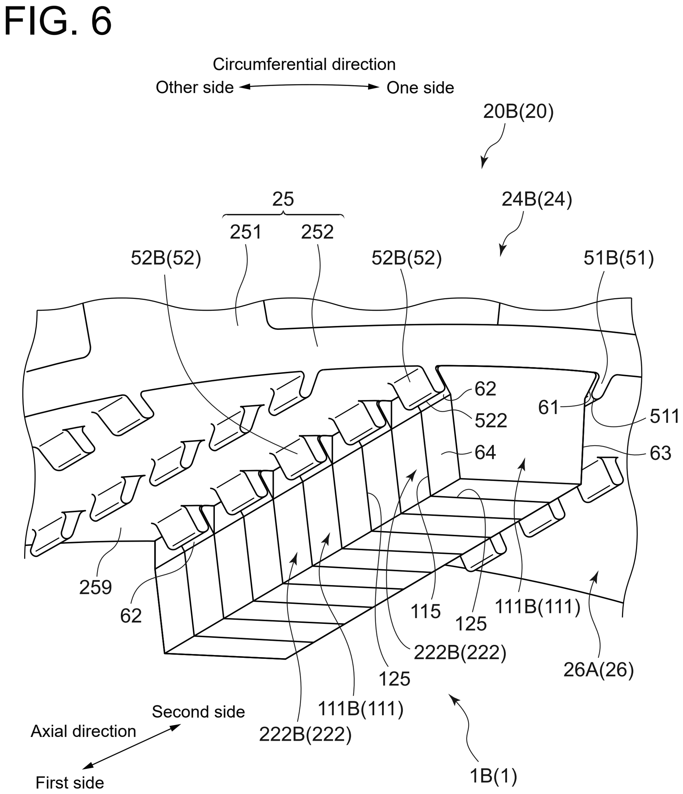

The first radial magnet 1A according to the first embodiment shown in FIG. 5 is composed of a single member extending in the axial direction, but the present disclosure is not limited thereto. For example, the first radial magnet 1 may be composed of a plurality of permanent magnets 12 (see FIG. 16), more specifically, a plurality of first split magnets 111 and second split magnets 222 (see FIG. 6) as an example.

An exemplary method of assembling the first radial magnet 1A will be described. The first radial magnet 1A is placed on the second side of the stator core 24 in the axial direction. The first radial magnet 1A is slid to the first side along the axial direction (arrow B1 in FIG. 5) to engage the first inclined surface 61 with the first support surface 55 and to engage the second inclined surface 62 with the second support surface 56. Thus, the first radial magnet 1A is assembled to the first projection 51A and the second projection 52A. By repeating such assembly, a plurality of first radial magnets 1A is assembled to the stator core 24A along the circumferential direction.

In a method of assembling the first radial magnet 1A according to another example, the first support surface 55 of the first projection 51A and the second support surface 56 of the second projection 52A may both be parallel to the radial direction before the first radial magnet 1A is placed. As a more specific example, the protruding directions of the first projection 51A and the second projection 52A may be parallel to the radial direction before the first radial magnet 1A is placed. In this case, the first projection 51A and the second projection 52A may be deformed toward the first radial magnet 1A after the first radial magnet 1A is placed between the first projection 51A and the second projection 52A. As a result of this deformation, the first support surface 55 engages the first inclined surface 61 while the second support surface 56 engages the second inclined surface 62.

With the above configuration, the axial range in which the first radial magnet 1A is supported by at least one of the first projection 51A or the second projection 52A can be expanded, so that the detachment of the first radial magnet 1 can be further suppressed.

### <Details of first projection 51 and second projection 52 (second embodiment)>

FIG. 6 is a schematic diagram of a stator 20B (20) according to the second embodiment. The stator 20B includes a stator core 24B (24). The stator core 24B includes a plurality of first projections 51B (51) arranged at intervals in the axial direction, and a plurality of second projections 52B (52) arranged at intervals in the axial direction. The axial length of each first projection 51B is the same as the axial length of each second projection 52B. The axial range in which the plurality of first projections 51B is disposed is the same as the axial range in which the plurality of second projections 52B is disposed. Such a stator core 24 may, as an example, have multiple types of laminated steel sheets. The multiple types of laminated steel plates include a first laminated steel sheet which forms the first projections 51B and the second projections 52B, and a second laminated steel which does not form the first projections 51B and the second projections 52B.

The first radial magnet 1B (1) supported by the first projections 51B and the second projections 52B includes a first split magnet 111B (111) and a second split magnet 222B (222) stacked in the axial direction. In this example, a plurality of first split magnets 111B and a plurality of second split magnets 222B are arranged alternately with each other in the axial direction. The first split magnet 111B engages the first projection 51B and the second projection 52B. On the other hand, the second split magnet 222C is disposed offset from the first projection 51B and the second projection 52B in the axial direction. Both the first split magnet 111B and the second split magnet 222B are examples of the stacked permanent magnets 12 (see FIG. 16) that constitutes the magnet 5.

As shown in FIG. 6, the first split magnet 111B has the first inclined surface 61, the second inclined surface 62, the first connection surface 63, and the second connection surface 64. These surfaces are as previously described. The number of first split magnets 111 is the same as the number of first projections 51B (i.e., the number of second projections 52B), and the axial length of each first split magnet 111 is the same as the axial length of each first projection 51B and each second projection 52B.

The second split magnet 222B does not have the first inclined surface 61, the second inclined surface 62, the first connection surface 63, and the second connection surface 64. One circumferential end surface of the second split magnet 222B, which may be substantially rectangular as an example, is flush with the first connection surface 63 of the first split magnet 111B. The other circumferential end surface of the second split magnet 222B is flush with the second connection surface 64 of the first split magnet 111B. Therefore, the second split magnet 222B is located between the tip 511 of the first projection 51B and the tip 522 of the second projection 52B in the circumferential direction, in other words, the second split magnet 222 is located between the tips 511 and 522 in axial view.

Each first split magnet 111B has a first magnet end surface 115, which is an end surface on the first side, and each second split magnet 222B has a second magnet end surface 125, which is an end surface on the second side. The first magnet end surface 115 and the second magnet end surface 125 are in contact with each other via an adhesive. Therefore, even though only the first split magnet 111B of the first and second split magnets 111B, 222B is supported by the first projection 51B and the second projection 52B, the first radial magnet 1B is prevented from coming off.

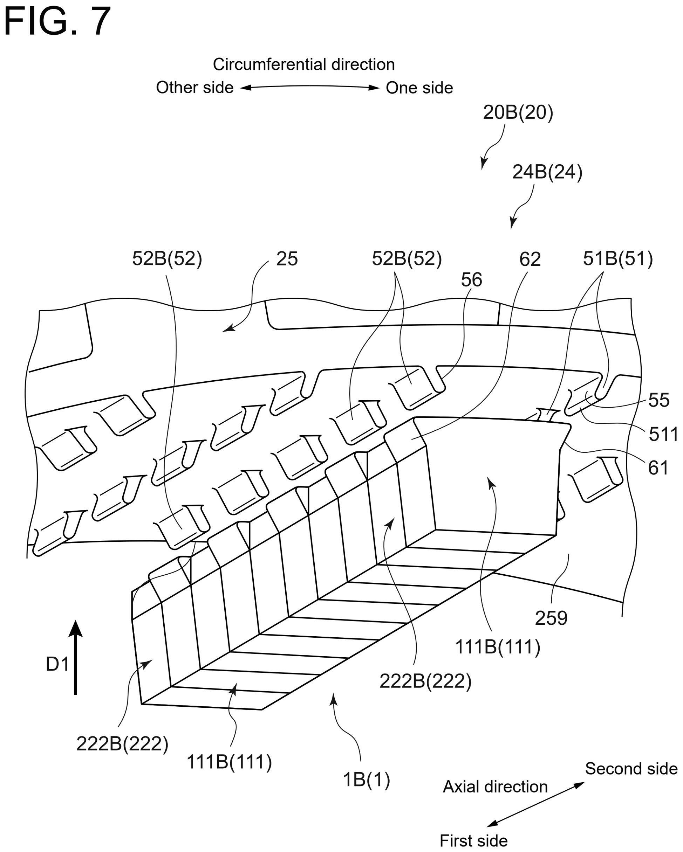

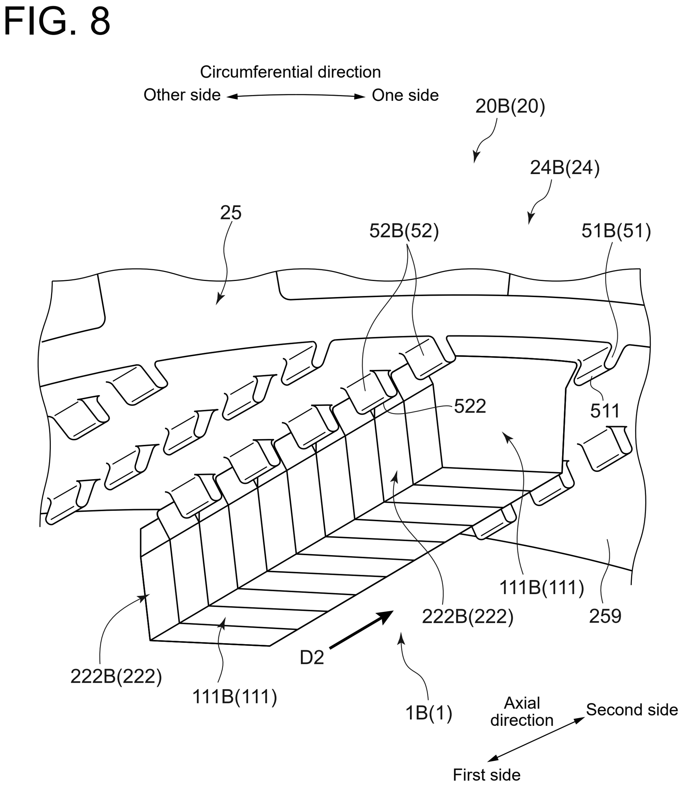

An exemplary method of assembling the first radial magnet 1B according to the second embodiment will be described with reference to FIGs. 6 to 8. FIGs. 7 and 8 are schematic diagrams showing the process of assembling the first radial magnet 1B. As shown in FIG. 7, the first radial magnet 1B is placed radially inward of the first projections 51B and the second projections 52B. At this time, the first split magnets 111B are displaced from the first projections 51B and the second projections 52B in the axial direction.

Next, the first radial magnet 1B is moved radially outward (arrow D1 in FIG. 7) to bring the first radial magnet 1B into contact with the teeth inner peripheral surface 259 (see FIG. 8). At this time, since the first split magnets 111B are displaced from the first projections 51B and the second projections 52B in the axial direction, interference of the first split magnets 111B with the first projections 51B and the second projections 52B can be avoided. Further, since the second split magnets 222 are located between the tips 511, 522 in the circumferential direction, interference of the second split magnets 222B with the first projections 51B and the second projections 52B can also be avoided.

The first radial magnet 1B is then slid in the axial direction (arrow D2 in FIG. 8) to engage the first split magnets 111B with the first projections 51B and the second projections 52B (see FIG. 6). Thus, the first radial magnet 1B is assembled to the first projections 51B and the second projections 52B. By repeating such assembly, a plurality of first radial magnets 1B is assembled to the stator core 24B along the circumferential direction.

With the above configuration, since the first radial magnet 1B is divided into a plurality of permanent magnets 12, the first split magnets 111B and the second split magnets 222B, eddy current losses generated in the first radial magnet 1B can be reduced. Additionally, the axial length of each of the first projections 51B and the second projections 52B can be shorter than the axial length of the teeth 25, further simplifying the configuration of the stator core 24B. Furthermore, in the process of assembling the first radial magnet 1B, the first radial magnet 1B may be moved from the radially inner side to the outer side (arrow D1 in FIG. 7) while the first split magnets 111B are axially displaced from the first projections 51B and the second projections 52B to bring the first radial magnet 1B into contact with the teeth inner peripheral surface 259, which is an example of the core inner peripheral surface 26A. The first radial magnet 1B may then be attached to the stator core 24B by sliding the first radial magnet 1B in the axial direction (arrow D2 in FIG. 8) to engage the first split magnets 111B with the first projections 51B and the second projections 52B. Since the sliding distance of the first radial magnet 1B in the axial direction can be reduced, the assembly of the stator 20B is facilitated.

The number of first projections 51B and the number of second projections 52B may be one. Even in this case, the above-described advantages are obtained.

Additionally, with the configuration where a plurality of first projections 51B and a plurality of second projections 52B are arranged at intervals in the axial direction, since the first radial magnet 1B is supported by the plurality of first projections 51B and the plurality of second projections 52B, the detachment of the first radial magnet 1B is further suppressed.

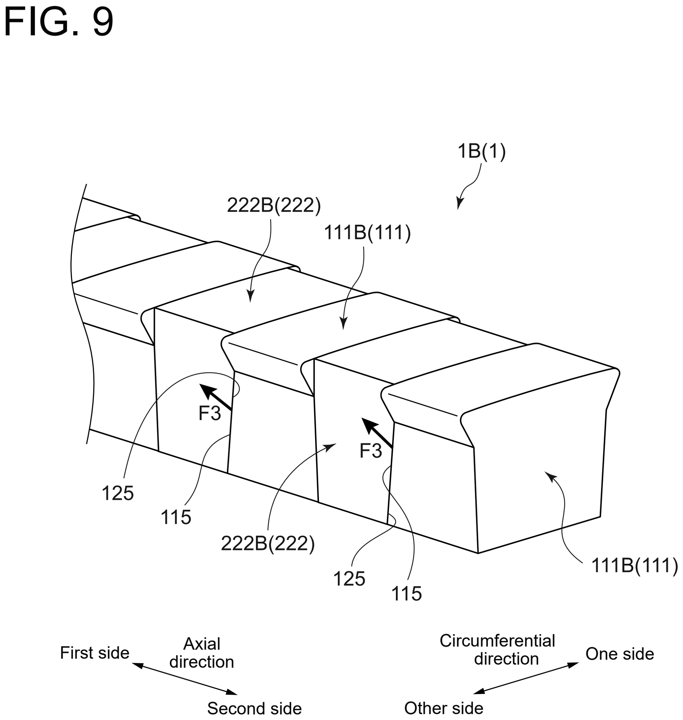

FIG. 9 is a schematic diagram showing a detailed example of the first split magnet 111B and the second split magnet 222B. Although not essential in the present disclosure, both the first magnet end surface 115 and the second magnet end surface 125 may slope toward the first side as they extend radially inward. The direct or indirect contact between the first magnet end surface 115 and the second magnet end surface 125 exerts a radially outward force F3 from the first magnet end surface 115 to the second magnet end surface 125. This further suppresses the detachment of the first radial magnet 1.

### <Details of first projection 51 and second projection 52 (third embodiment)>

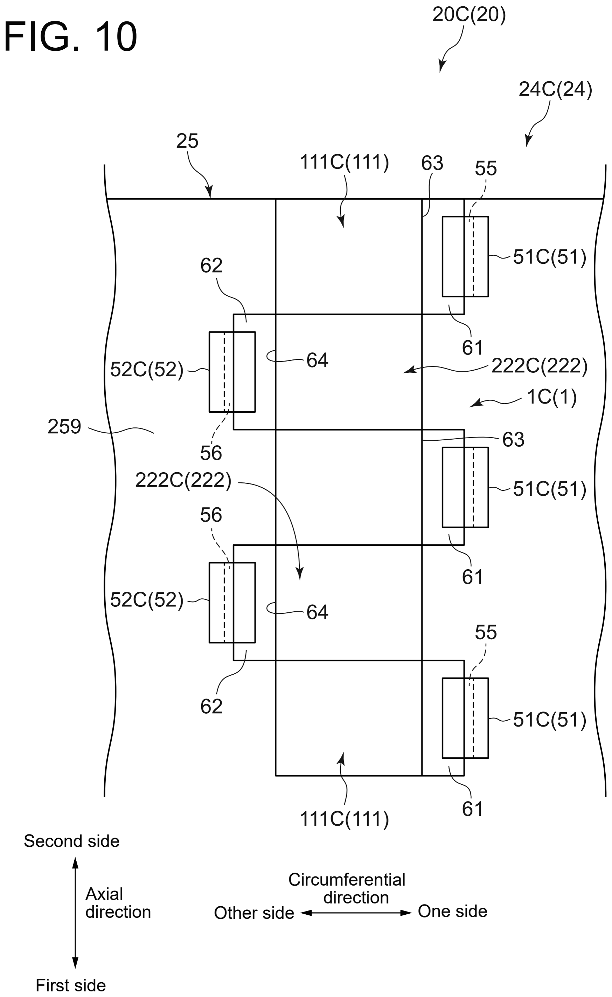

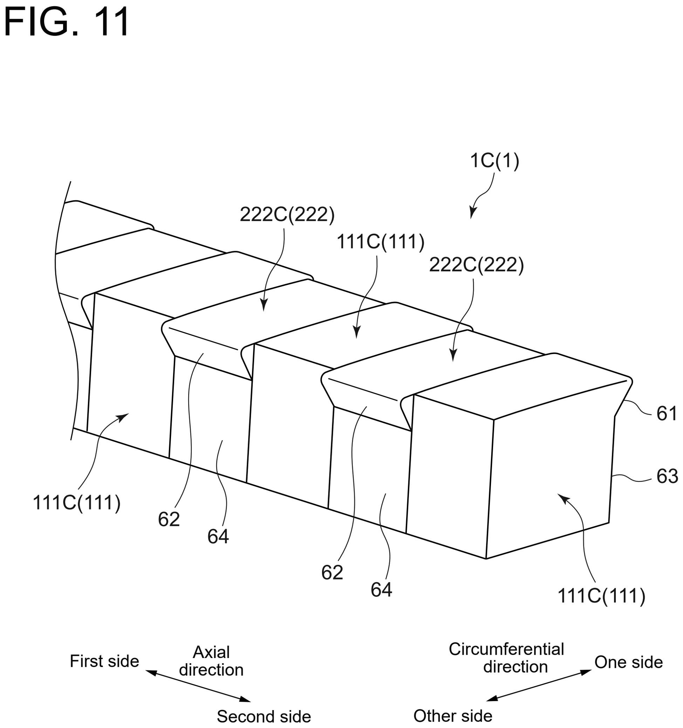

FIG. 10 is a schematic diagram of a stator 20C (20) according to the third embodiment. FIG. 10 shows the stator 20C viewed from the radially inner side, and the circumferential direction is shown to coincide with the transverse direction of the paper. FIG. 11 is a schematic diagram of a first radial magnet 1C (1) according to the third embodiment.

The stator 20C includes a stator core 24C (24). The stator core 24C includes a plurality of first projections 51C (51) arranged at intervals in the axial direction, and a plurality of the second projections 52C (52) arranged at intervals in the axial direction. The axial length of each first projection 51C is the same as the axial length of each second projection 52C. The axial range in which the plurality of first projections 51C is disposed differs from the axial range in which the plurality of second projections 52C is disposed. Such a stator 20C may, as an example, have multiple types of laminated steel sheets. The multiple types of laminated steel plates include a third laminated steel sheet which forms the first projections 51C, and a fourth laminated steel which forms the second projections 52C.

As shown in FIG. 11, the first radial magnet 1C (1) according to the third embodiment includes a first split magnet 111C (111) and a second split magnet 222C (222) stacked in the axial direction. In this example, a plurality of first split magnets 111C and a plurality of second split magnets 222C are arranged alternately with each other in the axial direction. The first split magnet 111C engages the first projection 51C, and the second split magnet 222C engages the second projection 52C. Both the first split magnet 111C and the second split magnet 222C are examples of the stacked permanent magnets 12 (see FIG. 16) that constitutes the magnet 5.

Each first split magnet 111C (111) has the first inclined surface 61 and the first connection surface 63. On the other hand, the second split magnet 222C (222) has the second inclined surface 62 and the second connection surface 64. The other circumferential end surface of the first split magnet 111C is flush with the second connection surface 64 of the second split magnet 222C. One circumferential end surface of the second split magnet 222C is flush with the first connection surface 63 of the first split magnet 111C.

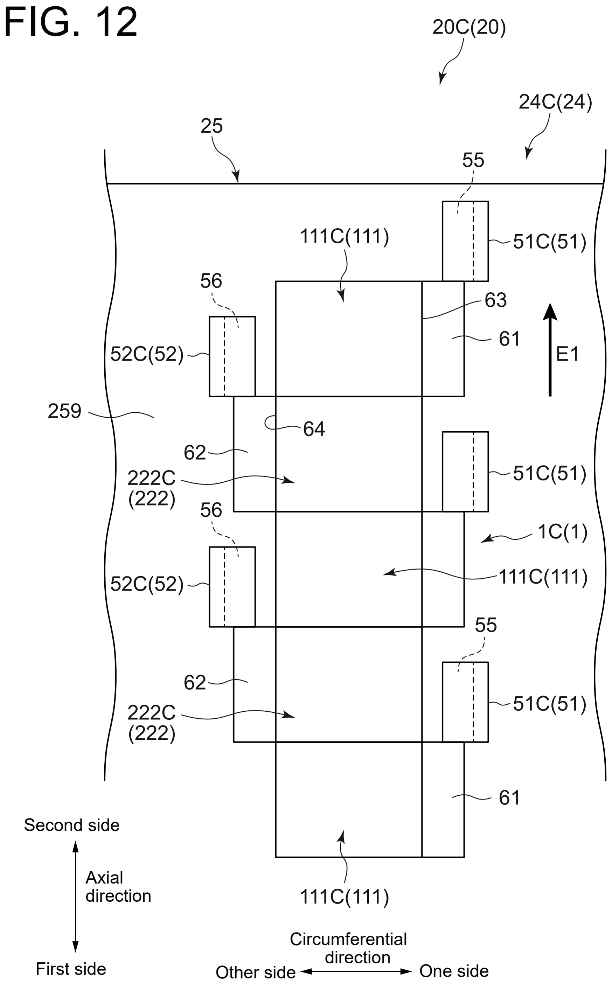

An exemplary method of assembling the first radial magnet 1C according to the third embodiment will be described with reference to FIGs. 10 and 12. FIG. 12 is a schematic diagram showing the process of assembling the first radial magnet 1C. As shown in FIG. 12, the first radial magnet 1C is placed radially inward of the first projections 51C and the second projections 52C. At this time, the first split magnets 111C are displaced from the first projections 51C in the axial direction, and the second split magnets 222C are displaced from the second projections 52C in the axial direction.

Next, the first radial magnet 1C is moved axially outward to bring the first radial magnet 1C into contact with the teeth inner peripheral surface 259 (see FIG. 12). At this time, the first split magnets 111C are displaced from the first projections 51C in the axial direction, and the second split magnets 222C are displaced from the second projections 52C in the axial direction. Thus, it is possible to avoid interference of the first split magnets 111C with the first projections 51C and interference of the second split magnets 222C with the second projections 52C.

The first radial magnet 1C is then slid in the axial direction (arrow E1 in FIG. 12) to engage the first split magnets 111C with the first projections 51C and to engage the second split magnets 222C with the second projections 52C (see FIG. 10). Thus, the first radial magnet 1C is assembled to the first projections 51C and the second projections 52C. By repeating such assembly, a plurality of first radial magnets 1C is assembled to the stator core 24C along the circumferential direction.

With the above configuration, since the first radial magnet 1C is divided into a plurality of permanent magnets 12, the first split magnets 111C and the second split magnets 222C, eddy current losses generated in the first radial magnet 1C can be reduced. Additionally, the axial length of each of the first projections 51C and the second projections 52C can be shorter than the axial length of the teeth 25, further simplifying the configuration of the stator core 24C. Furthermore, in the process of assembling the stator 20C, the first radial magnet 1C may be moved from the radially inner side to the outer side while the first split magnets 111C are axially displaced from the first projections 51C and the second split magnets 222C are axially displaced from the second projections 52C to bring the first radial magnet 1C into contact with the teeth inner peripheral surface 259, which is an example of the core inner peripheral surface 26. The first radial magnet 1C may then be attached to the stator core 24C by sliding the first radial magnet 1C in the axial direction (arrow E1 in FIG. 12) to engage the first split magnets 111C with the first projections 51C and to engage the second split magnets 222C with the second projections 52C. Since the sliding distance of the first radial magnet 1C in the axial direction can be reduced, the assembly of the stator 20C is facilitated.

The number of first projections 51B and the number of second projections 52B may be one. Even in this case, the above-described advantages are obtained.

### <Other magnets 5>

Referring to FIG. 3 again, the second radial magnet 2 is supported by the third projection 53 and the fourth projection 54. As already described, the second radial magnet 2 has the same shape as the first radial magnet 1, and the third projection 53 and the fourth projection 54 have the same shape as the first projection 51 and the second projection 52, respectively.

The shape of the first circumferential magnet 3 will be described with reference to FIG. 4. One circumferential end surface of the first circumferential magnet 3 has a first inclined extension surface 131 and a first extension surface 135, and the other circumferential end surface has a second inclined extension surface 132 and a second extension surface 136.

The first inclined extension surface 131 and the second inclined extension surface 132 slope away from the center of the first circumferential magnet 3 in the circumferential direction as they extend radially inward. The radially inner end of each of the first inclined extension surface 131 and the second inclined extension surface 132 is located radially inward of the projections 50. The first extension surface 135 extends radially inward from the radially inner end of the first inclined extension surface 131 and is in contact with the second radial magnet 2. An adhesive may be interposed between the first extension surface 135 and the second radial magnet 2. Similarly, the second extension surface 136 extends radially inward from the radially inner end of the second inclined extension surface 132 and is in contact with the first connection surface 63 of the first radial magnet 1. An adhesive may be interposed between the second extension surface 136 and the first connection surface 63.

The first inclined extension surface 131 is in contact with the fourth projection 54, and the second inclined extension surface 132 is in contact with the first projection 51. An adhesive may be interposed between the first inclined extension surface 131 and the fourth projection 54 and between the second inclined extension surface 132 and the first projection 51. As described above, a radially outward magnetic force acts on the first circumferential magnet 3 (arrow A3 in FIG. 3), and the first circumferential magnet 3 is pressed against the first projection 51 and the fourth projection 54.

The shape of the second circumferential magnet 4 will be described. One circumferential end surface of the second circumferential magnet 4 has a third inclined extension surface 133 and a third extension surface 137, and the other circumferential end surface has a fourth inclined extension surface 134 and a fourth extension surface 138.

The third inclined extension surface 133 and the fourth inclined extension surface 134 slope away from the center of the second circumferential magnet 4 in the circumferential direction as they extend radially inward. The radially inner end of each of the third inclined extension surface 133 and the fourth inclined extension surface 134 is located radially inward of the projections 50. The third extension surface 137 extends radially inward from the radially inner end of the third inclined extension surface 133 and is in contact with the second connection surface 64 of the first radial magnet 1. An adhesive may be interposed between the third extension surface 137 and the second connection surface 64. Similarly, the fourth extension surface 138 extends radially inward from the radially inner end of the fourth inclined extension surface 134 and is in contact with the second radial magnet 2. An adhesive may be interposed between the fourth extension surface 138 and the second circumferential magnet 4.

The third inclined extension surface 133 is in contact with the second projection 52, and the fourth inclined extension surface 134 is in contact with the third projection 53. An adhesive may be interposed between the third inclined extension surface 133 and the second projection 52 and between the fourth inclined extension surface 134 and the third projection 53. As described above, since a radially outward magnetic force acts on the second circumferential magnet 4 (arrow A4 in FIG. 3), the second circumferential magnet 4 is pressed against the second projection 52 and the third projection 53. The second circumferential magnet 4 and the first circumferential magnet 3 have the same shape.

### <Plate 70>

FIGs. 13A to 13C are schematic diagrams of the plurality of magnets 5. In FIGs. 13A to 13C, the circumferential direction is illustrated linearly, and the leftmost and rightmost magnets 5 are adjacent to each other in the circumferential direction. In FIGs. 13A to 13C, the front side of the paper is the radially inner side, and the back side of the paper is the radially outer side. FIGs. 13A to 13C schematically show a plate 70A (70) according to the first example, a plate 70B (70) according to the second example, and a plate 70C (70) according to the third example, respectively.

As shown in FIGs. 13A to 13C, the plate 70A to 70C (70) extends in the circumferential direction. Further, the plate 70A to 70C (70) is attached to the inner peripheral surfaces 15 of two or more magnets 5 that are arranged continuously in the circumferential direction, for example by an adhesive. The two or more magnets 5 arranged continuously include the first radial magnet 1. The plate 70A to 70C (70) is formed of a non-magnetic material. This prevents eddy currents from flowing through the plate 70, reducing the iron loss of the stator 20. Further, the plate 70 is preferably non-magnetic and non-conductive material. Examples of such material include glass fiber reinforced plastics (GFRP), carbon fiber reinforced plastics (CFRP), or heat-resistant resins.

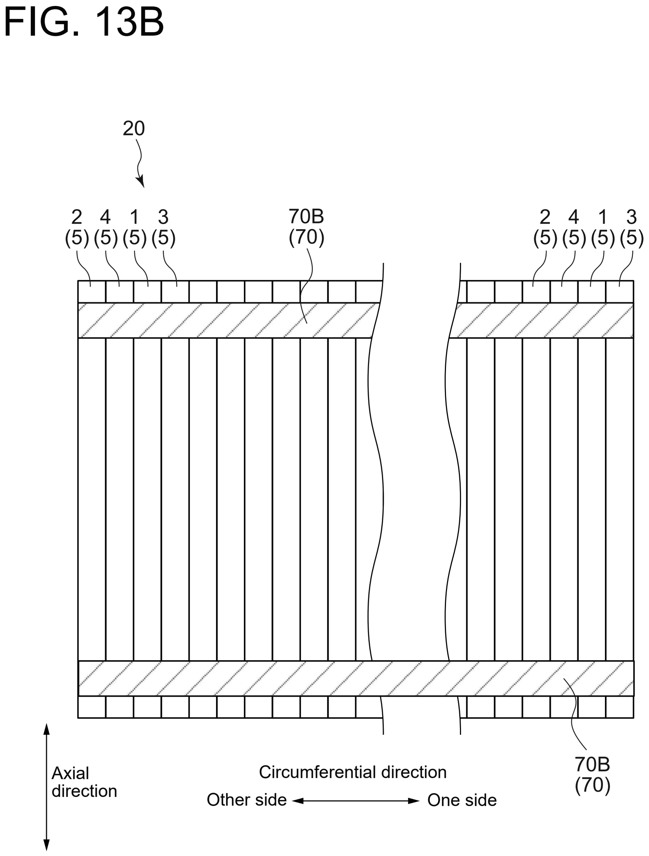

In the example of FIG. 13A, a plurality of plates 70A are arranged at equal intervals along the circumferential direction. The magnets 5 to which each plate 70A is attached include the first radial magnet 1 and the second radial magnet 2. In the illustrated example, the number of magnets 5 to which the plate 70A is attached is four or more, more specifically four. The plate 70B shown in FIG. 13B is attached to the inner peripheral surfaces 15 of the plurality of magnets 5 along the entire circumferential length of the stator core 24 (see FIG. 2). In other words, the plate 70B is a single cylindrical member attached to the inner peripheral surfaces 15 of all the magnets 5 constituting the stator 20. In the illustrated example, two plates 70B are attached to opposite ends of the magnets 5 in the axial direction. One of the plates 70B may be arranged so that one axial end of the magnets 5 is aligned with one axial end of the plate 70B. Similarly, the other plate 70B may be arranged so that the other axial end of the magnets 5 is aligned with the other axial end of the plate 70B.

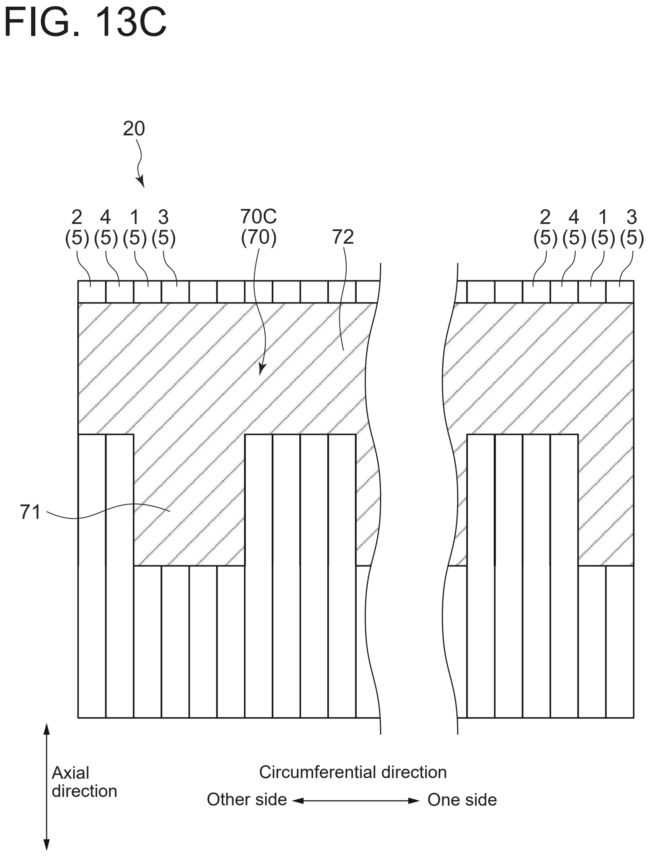

The plate 70C shown in FIG. 13C includes a first plate part 71 attached to the two or more magnets 5, and a second plate part 72 longer than the first plate part 71 in the circumferential direction. The first plate part 71 and the second plate part 72 are integrally formed, and the second plate part 72 is connected to one axial end of the first plate part 71. The number of magnets 5 to which the second plate part 72 is attached is greater than the number of magnets 5 to which the first plate part 71 is attached. More specifically, the magnets 5 to which the second plate part 72 is attached include the magnets 5 to which the first plate part 71 is attached and at least one other magnet 5. In the illustrated example, the second plate part 72 is attached to all the magnets 5 constituting the stator 20, and the number of magnets 5 to which the first plate part 71 is attached is four. In the illustrated example, a plurality of first plate parts 71 are arranged at equal intervals along the circumferential direction. The number of first plate parts 71 is not limited to two or more as shown in FIG. 13C, but may be one. Alternatively, the number of plates 70C is not limited to one, but may be two or more. In this case, a plurality of second plate parts 72 are arranged at equal intervals in the circumferential direction, and a plurality of first plate parts 71 are connected to each second plate part 72.

With the configuration where the stator 20 is equipped with the plate 70A (70), since the four magnets 5 are integrated by the plate 70A, the first projection 51 and the second projection 52 support not only the first radial magnet 1 but also the other magnets 5 including the first circumferential magnet 3 and the second circumferential magnet 4. Thus, it is possible to achieve a stator 20 that can further suppress the detachment of the plurality of magnets 5.

The above advantages can also be obtained when the plate 70B or 70C is used instead of the plate 70A. For example, when the plate 70B is applied, all the magnets 5 constituting the stator 20 are integrated by the attached plate 70B to suppress the detachment of the magnets 5.

Further, with the configuration where the magnets 5 to which the plate 70A is attached include the first radial magnet 1 and the second radial magnet 2, since the plate 70A is attached to the plurality of magnets 5, including the first radial magnet 1 and the second radial magnet 2, which are two magnets 5 with relatively high risk of detachment, the detachment of the plurality of magnets 5 can be suppressed more reliably.

Further, with the configuration where the plate 70C includes the first plate part 71 and the second plate part 72, the second plate part 72 can be attached to the position where the temperature rise is moderate, and the first plate part 71 can be attached to the position where the temperature rise is rapid. This suppresses the detachment of the integrated magnets 5 and also reduces damage to the plate 70C caused by thermal deformation.

### <Method of assembling stator 20>

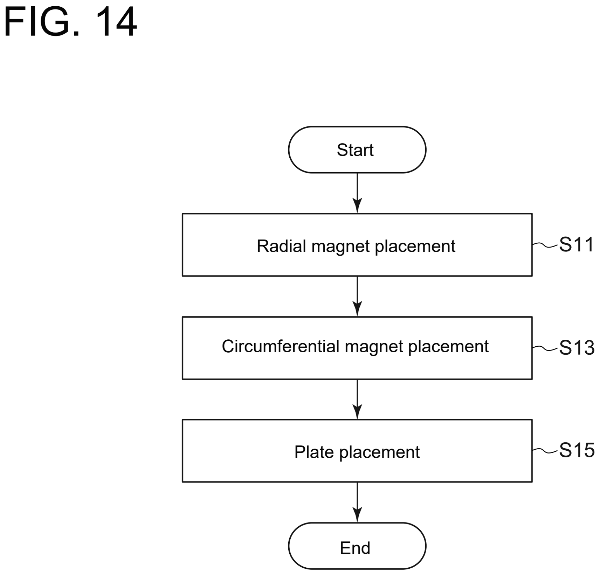

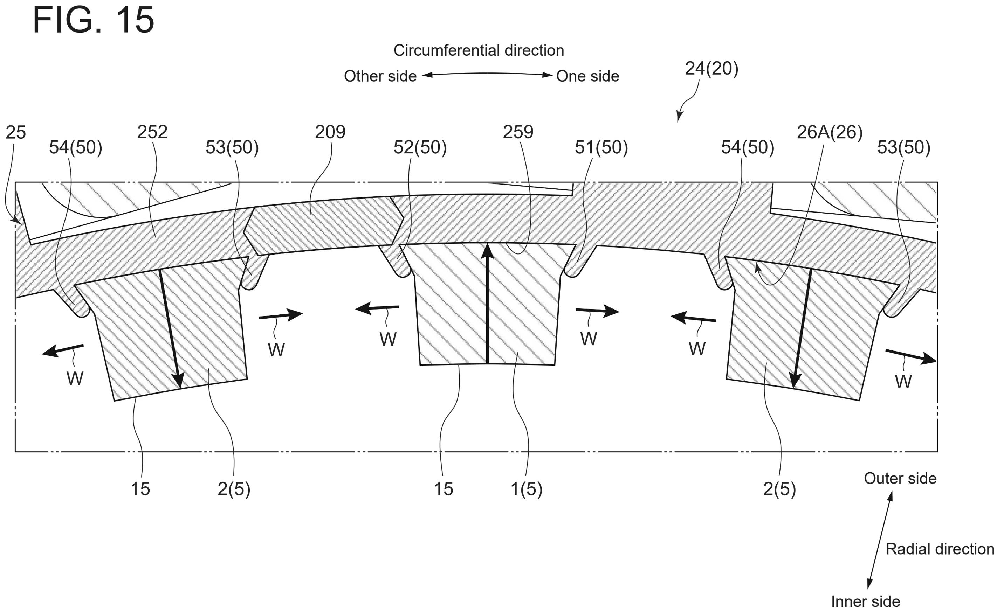

With reference to FIGs. 14 and 15, a method of assembling the stator 20 will be described. In the following description, "step" may be abbreviated as "S". FIG. 14 is a flowchart of the method of assembling the stator 20 according to an embodiment of the present disclosure. FIG. 15 is a schematic diagram showing a step (S11) of placing a radial magnet according to an embodiment of the present disclosure. The following assembling may be performed by the operator, a robot arm operated by the operator, or a combination thereof. At the start of assembly, the retaining member 209 is already in place (see FIG. 15).

First, a radial magnet placement step (S11) is performed to place the first radial magnet 1 and the second radial magnet 2 on the stator core 24.

The radial magnet placement step (S11) includes a first radial magnet placement step to place the first radial magnet 1 and a second radial magnet placement step to place the second radial magnet 2.

In the first radial magnet placement step, each of the plurality of first radial magnets 1 is assembled to the first projection 51 and the second projection 52. The details of the assembly process are as described above. In the assembly process, an adhesive may be used to bond the first radial magnet 1 to the first projection 51 and the second projection 52.

In the second radial magnet placement step, each of the plurality of second radial magnets 2 is assembled to the third projection 53 and the fourth projection 54. This assembly process is similar to the first radial magnet placement step and is implemented by sliding the second radial magnet 2 in the axial direction to engage the second radial magnet 2 with the third projection 53 and the fourth projection 54. In the assembly process, an adhesive may be used to bond the second radial magnet 2 to the third projection 53 and the fourth projection 54.

During the execution of S11, the first radial magnet 1 and the second radial magnet 2 placed on the stator core 24 are subjected to magnetic forces bringing them close to each other in the circumferential direction (arrow W). This is because the radially inner end of the first radial magnet 1 has an S pole, and the inner end of the second radial magnet 2 has an N pole. Also, the outer end of the first radial magnet 1 has an N pole, and the outer end of the second radial magnet 2 has an S pole. As a result, each projection 50 receives a circumferential force from the first radial magnet 1 and the second radial magnet 2. In this regard, with the configuration where the radial length of the projections 50 is not more than 25% of the radial length of the first radial magnet 1 and the second radial magnet 2, the bending moment generated at the projections 50 can be reduced, and damage to the projections 50 can be reduced.

Once S11 is completed (i.e., once the first radial magnets 1 and second radial magnets 2 are placed at equal intervals over the entire circumferential length of the stator 20), the bending moment generated at each projection 50 almost disappears. This is because the magnetic forces of the first radial magnet 1 and the second radial magnet 2 cancel each other in the circumferential direction.

After completion of S11, an assembly jig (not shown) may be temporarily placed to fix the first radial magnet 1 and the second radial magnet 2 in the assembly position. In one example, the assembly jig presses the first radial magnet 1 and the second radial magnet 2 from the inner side to the outer side in the radial direction.

Next, a circumferential magnet placement step (S13) is performed to place the first circumferential magnet 3 and the second circumferential magnet 4 on the stator core 24. For example, each of the plurality of first circumferential magnets 3 is placed between the first projection 51 and the fourth projection 54, and each of the plurality of second circumferential magnets 4 is placed between the second projection 52 and the third projection 53. More specifically, the first circumferential magnet 3 and the second circumferential magnet 4 are moved from the radially inner side to the outer side into a predetermined assembly position. During the execution of S13, an adhesive may be used to bond the first circumferential magnet 3 to the first and fourth projections 51 and 54, and the second circumferential magnet 4 to the second and third projections 52 and 53. By executing S13, the first circumferential magnet 3 and the second circumferential magnet 4 are placed on the stator core 24 (see FIG. 3).

Then, a plate placement step (S15) is performed to place the plate 70 on the inner peripheral surfaces 15 of two or more magnets 5 that are arranged continuously. The plate 70 is attached to the inner peripheral surfaces 15 with an adhesive, for example. Thus, the method of assembling the stator 20 is completed.

### <Another embodiment (first example)>

With reference to FIG. 16, a stator 20 according to another embodiment will be described. The stator 20 may further include a pressing member 80. The number of pressing members 80 in this example is the same as the number of magnets 5 constituting the stator 20.

Each magnet 5 of the stator 20 includes a plurality of permanent magnets 12 stacked in the axial direction. That is, each of the first radial magnet 1, the second radial magnet 2, the first circumferential magnet 3, and the second circumferential magnet 4 includes a plurality of permanent magnets 12. The pressing member 80 presses the inner peripheral surface 15 of each permanent magnet 12 radially outward. A more specific configuration will be described below.

The permanent magnets 12 include a first permanent magnet 121 located at the axially outermost position on the first side, and a second permanent magnet 122 located at the axially outermost position on the second side opposite the first side. The first permanent magnet 121 has a first surface 121A facing the first side, and the second permanent magnet 122 has a second surface 122A facing the second side. The first split magnet 111 or the second split magnet 222 shown in FIGs. 6, 10, etc. may be the first permanent magnet 121 or the second permanent magnet 122.

The stator 20 further includes a first reel 91 disposed on the first surface 121A, and a second reel 92 disposed on the second surface 122A.

The first reel 91 includes a first joint portion bonded to the first surface 121A, and a first cylinder portion disposed on the first joint portion. The first cylinder portion extends in a straight line along the circumferential direction and faces the first surface 121A with a gap in the axial direction. The first cylinder portion may be fixed to the first joint portion or may be rotatably provided on the first joint portion. A first hollow cylinder portion may be provided in place of the first cylinder portion.

The second reel 92 includes a second joint portion bonded to the second surface 122A, and a second cylinder portion disposed on the second joint portion. The second cylinder portion extends in a straight line along the circumferential direction and faces the second surface 122A with a gap in the axial direction. The second cylinder portion may be fixed to the second joint portion or may be rotatably provided on the second joint portion. A second hollow cylinder portion may be provided in place of the second cylinder portion.

The pressing member 80 in this example is a wire 89 that binds the first reel 91, the second reel 92, and the plurality of permanent magnets 12. The wire 89 is formed of CFRP or GFRP.

The wire 89 includes a first winding portion 81 wound on the first reel 91, a first axial extension portion 83 drawn from the first reel 91, a bent portion 85 that is connected to the first axial extension portion 83 and bends in contact with the second reel 92, a second axial extension portion 84 connected to the bent portion 85, a second winding portion 82 connected to the second axial extension portion 84 and wound on the first reel 91. For the sake of clarity, the second winding portion 82 is shown away from the first reel 91, but the actual second winding portion 82 is wound around the first cylinder portion of the first reel 91. For the same reason, the first axial extension portion 83 is shown away from the inner peripheral surface 15 of the permanent magnets 12, but the actual first axial extension portion 83 is in contact with the inner peripheral surface 15.

The first winding portion 81 is wound around the first cylinder portion of the first reel 91. The first axial extension portion 83 extends in the axial direction and is in contact with the inner peripheral surface 15 of each of the plurality of permanent magnets 12 from the radially inner side. More specifically, a groove (not shown) extending in the axial direction is provided on the inner peripheral surface 15 of each permanent magnet 12, and the first axial extension portion 83 is placed in the groove. The first axial extension portion 83 presses the respective inner peripheral surfaces 15 radially outward. The bent portion 85 is in contact with approximately half of the outer peripheral surface of the second cylinder portion of the second reel 92. The bent portion 85 in other examples may be wound around the second reel 92. The second axial extension portion 84 is disposed radially outward of the first axial extension portion 83 and extends in the axial direction. In this example, a hole is formed in each permanent magnet 12, and the second axial extension portion 84 is placed in the holes. In other examples, the second axial extension portion 84 may be placed in contact with the outer peripheral surface of the teeth 25 (more specifically, the outer peripheral surface of the tip portions 252 shown in FIG. 2).

With the configuration where the stator 20 includes the pressing member 80, since each permanent magnet 12 is pressed radially outward, the detachment of at least one of the plurality of permanent magnets 12 constituting each magnet 5 is suppressed. In particular, with the configuration where the pressing member 80 presses the plurality of permanent magnet 12 of the first radial magnet 1, since the first radial magnet 1, which has a relatively high risk of detachment, is pressed, the detachment of at least one of the plurality of permanent magnets 12 constituting the first radial magnet 1 is suppressed. Similarly, with the configuration where the pressing member 80 presses the plurality of permanent magnet 12 of the second radial magnet 2, since the second radial magnet 2, which has the next highest risk of detachment after the first radial magnet 1, is pressed, the detachment of at least one of the plurality of permanent magnets 12 constituting the second radial magnet 2 is suppressed.

The pressing member 80 is not limited to the wire 89. For example, it may be a rubber band that binds the stator core 24 and the plurality of permanent magnets 12. Also in this embodiment, the above advantages can be obtained. Further, at least one of the pressing member 80 that presses the first circumferential magnet 3 or the pressing member 80 that presses the second circumferential magnet 4 may not be provided. That is, the number of pressing members 80 may be less than the number of magnets 5 constituting the stator 20.

Additionally, with the configuration where the pressing member 80 is the wire 89 that binds the first reel 91, the second reel 92, and the plurality of permanent magnets 12, the second axial extension portion 84 presses each of the plurality of permanent magnets 12 radially outward due to tension generated by the wire 89 wound around at least one of the first reel 91 or the second reel 92. This suppresses the detachment of at least one of the plurality of permanent magnets 12 constituting each magnet 5.

### <Another embodiment (second example)>

The Halbach-arrayed magnet group may consist of eight magnets 5 continuously arranged in the circumferential direction. In this case, the arrangement is a so-called dual Halbach array, in which each of the first circumferential magnet 3 and the second circumferential magnet 4 adjacent to the first radial magnet 1 in the circumferential direction has magnetization components not only in the circumferential direction but also in the radial direction.

### <Conclusion>

The contents described in some embodiments described above would be understood as follows, for instance.
1) A stator (20) according to an embodiment of the present disclosure includes: a stator core (24, 28); and a plurality of magnets (5) including a group of magnets disposed radially inward of the stator core and arranged continuously in the circumferential direction (e.g., four magnets 5 arranged continuously in the circumferential direction), the group of magnets being arranged in a Halbach array. The group of magnets includes a first radial magnet (1) magnetized radially outward. The first radial magnet has: an outer peripheral surface (65); a first inclined surface (61) that is connected to one end portion (65a) of the outer peripheral surface in the circumferential direction and slopes toward the center (imaginary line K1) of the first radial magnet in the circumferential direction as the surface extends radially inward; and a second inclined surface (62) that is connected to the other end portion (65b) of the outer peripheral surface in the circumferential direction and slopes toward the center of the first radial magnet as the surface extends radially inward. The stator core includes: a core inner peripheral surface (26) along which the plurality of magnets is arranged; a first projection (51) protruding radially inward from the core inner peripheral surface and having a first support surface (55) supporting the first inclined surface; and a second projection (52) protruding radially inward from the core inner peripheral surface and having a second support surface (56) supporting the second inclined surface. Both the first support surface and the second support surface are inclined with respect to the radial direction and slope toward the center of the first radial magnet as the surfaces extend radially inward.

With the above configuration 1), since the first support surface and the second support surface are inclined with respect to the radial direction, the radially outward force (F1, F2) acting on the first radial magnet from each of the first support surface and the second support surface can be increased, and the detachment of the first radial magnet can be suppressed. Additionally, since the force acting on the first radial magnet can be increased without increasing the radial length of each of the first support surface and the second support surface, the radial length of each of the first projection and the second projection can be shortened, and the configuration of the stator core can be simplified. Thus, it is possible to achieve a stator that can suppress the detachment of at least one of the plurality of magnets with a simple configuration.

2) In some embodiments, in the stator as defined in the above 1), the first radial magnet includes a first split magnet (5) and a second split magnet (5) stacked in an axial direction. The first split magnet has the first inclined surface and the second inclined surface and is supported by the first projection and the second projection. The second split magnet is disposed offset from the first projection and the second projection in the axial direction and is positioned between a tip (511) of the first projection and a tip (522) of the second projection in the circumferential direction.

With the above configuration 2), since the first radial magnet is divided into a plurality of permanent magnets, eddy current losses generated in the first radial magnet can be reduced. Additionally, the axial length of each of the first projection and the second projection can be shorter than the axial length of the teeth, further simplifying the configuration of the stator core. Furthermore, in the stator assembly process, the first radial magnet may be moved from the radially inner side to the outer side while the first split magnet is axially displaced from the first projection and the second projection to bring the first radial magnet into contact with the core inner peripheral surface. The first radial magnet may then be attached to the stator core by sliding the first radial magnet in the axial direction to engage the first split magnet with the first projection and the second projection. Since the sliding distance of the first radial magnet in the axial direction can be reduced, the assembly of the stator is facilitated.

3) In some embodiments, in the stator as defined in the above 1), the first radial magnet includes a first split magnet (5) and a second split magnet (5) stacked in an axial direction. The first projection and the second projection are at different positions in the axial direction. The first split magnet has the first inclined surface and is supported by the first projection. The second split magnet has the second inclined surface and is supported by the second projection.

With the above configuration 3), since the first radial magnet is divided into a plurality of permanent magnets, eddy current losses generated in the first radial magnet can be reduced. Additionally, the axial length of each of the first projection and the second projection can be shorter than the axial length of the teeth, further simplifying the configuration of the stator core. Furthermore, in the stator assembly process, the first radial magnet may be moved from the radially inner side to the outer side while the first split magnet is axially displaced from the first projection and the second split magnet is axially displaced from the second projection to bring the first radial magnet into contact with the core inner peripheral surface. The first radial magnet may then be attached to the stator core by sliding the first radial magnet in the axial direction to engage the first split magnet with the first projection and to engage the second split magnet with the second projection. Since the sliding distance of the first radial magnet in the axial direction can be reduced, the assembly of the stator is facilitated.

4) In some embodiments, in the stator as defined in the above 2) or 3), the first radial magnet includes a plurality of the first split magnets and a plurality of the second split magnets stacked alternately in the axial direction. The stator core includes: a plurality of the first projections arranged at intervals in the axial direction; and a plurality of the second projections arranged at intervals in the axial direction.

With the above configuration 4), since the plurality of first projections and the plurality of second projections support the first radial magnet, the detachment of the first radial magnet is further suppressed.

5) In some embodiments, in the stator as defined in any of the above 2) to 4), the first split magnet has a first magnet end surface (115) which is an end surface on a first side in the axial direction. The second split magnet has a second magnet end surface (125) which is an end surface on a second side in the axial direction and is in contact with the first magnet end surface. Both the first magnet end surface and the second magnet end surface slope toward the first side in the axial direction as the surfaces extend radially inward.

With the above configuration 5), a radially outward force acts on the second magnet end surface of the second split magnet from the first magnet end surface of the first split magnet supported by at least the first projection of the first or second projections. This suppresses the detachment of the second split magnet. Thus, the detachment of the first radial magnet is further suppressed.

6) In some embodiments, in the stator as defined in the above 1), at least one of the first projection or the second projection extends continuously in an axial direction along an entire axial length of the core inner peripheral surface.

With the above configuration 6), the axial range in which the first radial magnet is supported by at least one of the first projection or the second projection can be expanded, further suppressing the detachment of the first radial magnet.

7) In some embodiments, in the stator as defined in any of the above 1) to 6), the stator core further includes a plurality of teeth arranged at intervals in the circumferential direction. The core inner peripheral surface includes a teeth inner peripheral surface (66) which is an inner peripheral surface of at least one of the plurality of teeth.

With the above configuration 7), the first projection and the second projection can be integrated with the plurality of teeth, further simplifying the configuration of the stator.

8) In some embodiments, in the stator as defined in any of the above 1) to 7), the stator further includes a plate (70) extending in the circumferential direction and attached to inner peripheral surfaces (5) of two or more magnets including the first radial magnet.

With the above configuration 8), the first radial magnet supported by the first projection and the second projection is connected to the other magnet via the plate. This allows the other magnet to be indirectly supported by the first projection and the second projection. Thus, it is possible to achieve a stator that can suppress the detachment of the plurality of magnets.

9) In some embodiments, in the stator as defined in the above 8), the group of magnets further includes a second radial magnet (2) magnetized radially inward. The magnets to which the plate is attached include the first radial magnet and the second radial magnet.

With the above configuration 9), since the plate is attached to a plurality of magnets, including the first radial magnet and the second radial magnet, which are two magnets with relatively high risk of detachment, the detachment of the plurality of magnets can be suppressed more reliably.

10) In some embodiments, in the stator as defined in the above 8), the plate is a single member attached to the inner peripheral surfaces of the plurality of magnets along an entire circumferential length of the stator core.

With the above configuration 10), all the magnets are integrated by the plate, and the detachment of the magnets is suppressed.

11) In some embodiments, in the stator as defined in the above 10), the plate includes: a first plate part (71) attached to the two or more magnets; and a second plate part (72) connected to one axial end of the first plate part and longer than the first plate part in the circumferential direction. The magnets to which the second plate part is attached include the two or more magnets to which the first plate part is attached and at least one other magnet.

With the above configuration 11), the second plate part can be attached to the position where the temperature rise is moderate, and the first plate part can be attached to the position where the temperature rise is rapid. This suppresses the detachment of the integrated magnets and also reduces damage to the plate caused by thermal deformation.

12) In some embodiments, in the stator as defined in any of the above 1) to 11), the first radial magnet includes a plurality of permanent magnets (12) stacked in an axial direction. The stator core further includes a pressing member (80) that presses an inner peripheral surface (5) of each permanent magnet radially outward.

With the above configuration 12), since the first radial magnet, which has a relatively high risk of detachment, is pressed radially outward, the detachment of at least one of the plurality of permanent magnets constituting the first radial magnet can be suppressed.

13) In some embodiments, in the stator as defined in the above 12), the plurality of permanent magnets includes: a first permanent magnet (5) located at an axially outermost position on a first side; and a second permanent magnet (5) located at an axially outermost position on a second side. The stator further includes: a first reel (91) disposed on a first surface (121A) of the first permanent magnet facing the first side; and a second reel (92) disposed on a second surface (122A) of the second permanent magnet facing the second side. The pressing member is a wire that binds the first reel, the second reel, and the plurality of permanent magnets.

With the above configuration 13), the tension generated by the wire wound around at least one of the first reel or the second reel pushes the plurality of permanent magnets radially outward. This suppresses the detachment of at least one of the plurality of permanent magnets constituting the magnet.

14) A magnetic geared electrical machine (10) according to at least one embodiment of the present disclosure includes: the stator (20) defined in any one of the above 1) to 13); a pole piece rotor (30) including a plurality of pole pieces disposed radially inward of the stator and arranged in the circumferential direction; and a magnet rotor (40) including an inner magnet disposed radially inward of the plurality of pole pieces.

With the above configuration 14), the same advantages as in the above 1) are achieved.

15) A method of assembling a stator (20) according to at least one embodiment of the present disclosure includes a step (S11) of sliding the first radial magnet (1) in an axial direction to engage the first inclined surface (61) with the first projection (51) and to engage the second inclined surface (62) with the second projection (52).

With the above configuration 15), the same advantages as in the above 1) are achieved.

### Reference Signs List

- 1: First radial magnet
- 2: Second radial magnet
- 3: First circumferential magnet
- 4: Second circumferential magnet
- 5: Magnet
- 10: Magnetic geared electrical machine
- 15: Inner peripheral surface
- 20: Stator
- 24, 28: Stator core
- 25: Tooth
- 26: Core inner peripheral surface
- 29: Yoke
- 30: Pole piece rotor
- 40: Magnet rotor
- 50: Projection
- 51: First projection
- 52: Second projection
- 53: Third projection
- 54: Fourth projection
- 55: First support surface
- 56: Second support surface
- 61: First inclined surface
- 62: Second inclined surface
- 65: Outer peripheral surface
- 65a: One end portion
- 65b: Other end portion
- 66: Inner peripheral surface
- 70: Plate
- 71: First plate part
- 72: Second plate part
- 80: Pressing member
- 91: First reel
- 92: Second reel
- 111: First split magnet
- 115: First magnet end surface
- 121: First permanent magnet
- 121A: First surface
- 122: Second permanent magnet
- 122A: Second surface
- 125: Second magnet end surface
- 150: Attachment member
- 152: Extension portion
- 161: Engagement hole portion
- 166: Engagement protruding portion
- 170: Pressing rod
- 201: Slot opening
- 222: Second split magnet
- 259: Teeth inner peripheral surface
- 511, 522: Tip
- G1: Outer air gap
- G2: Inner air gap
- K1: Imaginary line

## Claims

1. A stator, comprising:
a stator core; and
a plurality of magnets including a group of magnets disposed radially inward of the stator core and arranged continuously in the circumferential direction, the group of magnets being arranged in a Halbach array,
wherein the group of magnets includes a first radial magnet magnetized radially outward,
wherein the first radial magnet has:
an outer peripheral surface;
a first inclined surface that is connected to one end portion of the outer peripheral surface in the circumferential direction and slopes toward the center of the first radial magnet in the circumferential direction as the surface extends radially inward; and
a second inclined surface that is connected to the other end portion of the outer peripheral surface in the circumferential direction and slopes toward the center of the first radial magnet as the surface extends radially inward,
wherein the stator core includes:
a core inner peripheral surface along which the plurality of magnets is arranged;
a first projection protruding radially inward from the core inner peripheral surface and having a first support surface supporting the first inclined surface; and
a second projection protruding radially inward from the core inner peripheral surface and having a second support surface supporting the second inclined surface, and
wherein both the first support surface and the second support surface are inclined with respect to the radial direction and slope toward the center of the first radial magnet as the surfaces extend radially inward.

2. The stator according to claim 1,
wherein the first radial magnet includes a first split magnet and a second split magnet stacked in an axial direction,
wherein the first split magnet has the first inclined surface and the second inclined surface and is supported by the first projection and the second projection, and
wherein the second split magnet is disposed offset from the first projection and the second projection in the axial direction and is positioned between a tip of the first projection and a tip of the second projection in the circumferential direction.

3. The stator according to claim 1,
wherein the first radial magnet includes a first split magnet and a second split magnet stacked in an axial direction,
wherein the first projection and the second projection are at different positions in the axial direction,
wherein the first split magnet has the first inclined surface and is supported by the first projection, and
wherein the second split magnet has the second inclined surface and is supported by the second projection.

4. The stator according to claim 2 or 3,
wherein the first radial magnet includes a plurality of the first split magnets and a plurality of the second split magnets stacked alternately in the axial direction, and
wherein the stator core includes:
a plurality of the first projections arranged at intervals in the axial direction; and
a plurality of the second projections arranged at intervals in the axial direction.

5. The stator according to claim 3,
wherein the first split magnet has a first magnet end surface which is an end surface on a first side in the axial direction,
wherein the second split magnet has a second magnet end surface which is an end surface on a second side in the axial direction and is in contact with the first magnet end surface, and
wherein both the first magnet end surface and the second magnet end surface slope toward the first side in the axial direction as the surfaces extend radially inward.

6. The stator according to claim 1,
wherein at least one of the first projection or the second projection extends continuously in an axial direction along an entire axial length of the core inner peripheral surface.

7. The stator according to any one of claims 1 to 3,
wherein the stator core further includes a plurality of teeth arranged at intervals in the circumferential direction, and
wherein the core inner peripheral surface includes a teeth inner peripheral surface which is an inner peripheral surface of at least one of the plurality of teeth.

8. The stator according to any one of claims 1 to 3, further comprising a plate extending in the circumferential direction and attached to inner peripheral surfaces of two or more magnets including the first radial magnet.

9. The stator according to claim 8,
wherein the group of magnets further includes a second radial magnet magnetized radially inward, and
wherein the magnets to which the plate is attached include the first radial magnet and the second radial magnet.

10. The stator according to claim 8,
wherein the plate is a single member attached to the inner peripheral surfaces of the plurality of magnets along an entire circumferential length of the stator core.

11. The stator according to claim 10,
wherein the plate includes:
a first plate part attached to the two or more magnets; and
a second plate part connected to one axial end of the first plate part and longer than the first plate part in the circumferential direction, and
wherein the magnets to which the second plate part is attached include the two or more magnets to which the first plate part is attached and at least one other magnet.

12. The stator according to any one of claims 1 to 3,
wherein the first radial magnet includes a plurality of permanent magnets stacked in an axial direction, and
wherein the stator core further includes a pressing member that presses an inner peripheral surface of each permanent magnet radially outward.

13. The stator according to claim 12,
wherein the plurality of permanent magnets includes:
a first permanent magnet located at an axially outermost position on a first side; and
a second permanent magnet located at an axially outermost position on a second side,
wherein the stator further comprises:
a first reel disposed on a first surface of the first permanent magnet facing the first side; and
a second reel disposed on a second surface of the second permanent magnet facing the second side, and
wherein the pressing member is a wire that binds the first reel, the second reel, and the plurality of permanent magnets.

14. A magnetic geared electrical machine, comprising:
the stator according to any one of claims 1 to 3;
a pole piece rotor including a plurality of pole pieces disposed radially inward of the stator and arranged in the circumferential direction; and
a magnet rotor including an inner magnet disposed radially inward of the plurality of pole pieces.

15. A method of assembling the stator according to any one of claims 1 to 3, comprising:
a step of sliding the first radial magnet in an axial direction to engage the first inclined surface with the first projection and to engage the second inclined surface with the second projection.
